# EUROPÄISCHE PATENTSCHRIFT

(11) **EP 0 807 606 B1**
(45) Veröffentlichungstag und Bekanntmachung des Hinweises auf die Patenterteilung: **16.08.2001**
(21) Anmeldenummer: 97107773.0
(22) Anmeldetag: 13.05.1997
(51) Int. Cl.: C02F 9/00, C02F 1/58, C02F 1/20, C02F 1/64

(54) **Verfahren zur Aufbereitung photographischer Bäder aus Color-Prozessen**
Process for working up of photographic baths resulting from colour processing
Procédé de retraitement de bains photographiques émanant de procédés couleur

(30) Priorität: 16.05.1996 DE 19619828
(43) Veröffentlichungstag der Anmeldung: 19.11.1997
(73) Patentinhaber: Noero, Roger, 76199 Karlsruhe (DE)
(72) Erfinder: Noero, Roger, 76199 Karlsruhe (DE)
(74) Vertreter: Lichti, Heiner, Dipl.-Ing.

(56) Entgegenhaltungen:
- DE-A- 4 025 895
- DE-A- 4 417 933
- DE-C- 3 440 894
- US-A- 4 755 453
- US-A- 5 350 522
- DATABASE WPI Section Ch, Week 9527 Derwent Publications Ltd., London, GB; Class D15, AN 95-203129 XP002036614 & JP 07 116 670 A (KO ENG KK) , 9.Mai 1995
- DATABASE WPI Section Ch, Week 7626 Derwent Publications Ltd., London, GB; Class D15, AN 76-48533X XP002036615 & JP 51 052 666 A (INOUE S) , 10.Mai 1976
- PATENT ABSTRACTS OF JAPAN vol. 011, no. 317 (C-452), 15.Oktober 1987 & JP 62 103050 A (HITACHI PLANT ENG & CONSTR CO LTD), 13.Mai 1987,

## Beschreibung

Die Erfindung betrifft ein Verfahren zur Aufarbeitung verbrauchter photographischer Bäder aus Color-Prozessen, nämlich Bleich- oder Bleichfixierbädern mit einem überwiegenden Gehalt an Ammonium-Fe-EDTA (Ethylendiamintetraessigsäure) als Komplexbildner, Fixierbädern mit einem überwiegenden Gehalt an Thiosulfaten, insbesondere Ammonium- und gegebenenfalls Natriumthiosulfat, und Entwicklungsbädern mit einem überwiegenden Gehalt an Sulfit, insbesondere Natriumsulfit.

Der in Bleich- und Bleichfixierbädern für farbphotographische Prozesse verwendete Komplexbildner stellt in ökologischer Hinsicht die problematischste Komponente in photographischen Bädern dar. Bis vor einiger Zeit wurde als Komplexbildner vornehmlich Hexacyanoferrat verwendet, das wegen der Gefahr der Freisetzung von Cyaniden durch andere Komplexbildner, überwiegend durch Ammonium-Fe-Komplexe der Ethylendiamintetraessigsäure (EDTA), ersetzt worden ist. Diese Komplexbildner weisen zunächst den Vorteil fehlender oder vernächlässigbarer Toxizität auf.

Ferner lassen sie sich im Bleichbad durch Belüftung einfach verarbeiten. Das beim Bleichvorgang entstehende zweiwertige Eisen wird durch den Luftsauerstoff reoxidiert. Dabei wirkt sich die Stabilität des Fe-EDTA-Komplexes äußerst positiv aus. Diese Stabilität ist jedoch nachteilig bei der Aufarbeitung der Bäder, da Ammonium-Fe-EDTA biologisch nicht abbaubar ist, infolgedessen nicht in Abwässer abgeleitet werden darf, sondern als Sondermüll zu behandeln ist.

Die sich hieraus ergebenen Probleme und Kosten werden besonders deutlich daran, daß Bleich- und Bleichfixierbäder eine EDTA-Konzentration bis zu 45 g/l besitzen. Außerdem wird EDTA auch häufig als Kalkschutzmittel in Schwarz/Weiß-Prozessen eingesetzt und liegt dort in Entwicklungsbädern in einer Konzentration von 1 bis 4 g/l vor.

Das bisher einzig praktizierte Verfahren zur Aufarbeitung von Fe-EDTA-Komplexen ist die Ozonbehandlung. Dabei können jedoch bei vertretbarem Kostenaufwand nur ca. 50 % abgebaut werden. Auch ein biologischer Abbau durch natürliche Populationen verläuft extrem langsam, so daß sich auch insoweit eine Ableitung in Abwässer verbietet (W. Baumann "Fotochemikalien", 2. Auflage, Springer Verlag, S.47).

Aus "Lehr- und Handbuch der Abwassertechnik, Bd. VII: Industrieabwässer mit anorganischen Inhaltsstoffen, Ernst und Sohn, Berlin 1985" sind Untersuchungen zum Kristallisationsverhalten von EDTA bei varrierendem pH-Wert bekannt. Dabei zeigte sich bei einem unter ca. pH 3 absinkenden pH-Wert eine verringerte Löslichkeit, die bei ungefähr pH 1,7 ein Minimum durchläuft und bei weiter sinkendem pH-Wert wieder ansteigt.

Bleichfixierbäder, wie auch Fixierbäder ohne Bleichwirkung, und zwar auch solche für Schwarz/Weiß-Photographien enthalten neben dem beschriebenen Komplexbildner größere Mengen Ammoniumthiosulfat, gegebenenfalls auch Natriumthiosulfat. Die weiterhin verwendeten Entwicklerlösungen enthalten neben anderen Komponenten bis zu 100 g Sulfite pro Liter, in der Regel Natriumsulfit, das als Sauerstoffakzeptor dient und während des photographischen Prozesses nur teilweise aufoxidiert. In verbrauchten Bädern finden sich hiervon noch 40 bis 50 g/l.

Der Erfindung liegt die Aufgabe zugrunde, ein Verfahren vorzuschlagen, mit dem die genannten photographischen Bäder aus Color-Prozessen derart aufgearbeitet werden können, daß die entstehenden Produkte wiederverwertbar sind, also in technische Prozesse zurückgeführt werden können, und die anfallende Restflüssigkeit nur noch umweltverträgliche Reststoffe enthält, die eine Abwassereinleitung gestatten.

Diese Aufgabe wird erfindungsgemäß dadurch gelöst, daß nach dem in einem herkömmlichen Prozeß erfolgenden Abscheiden des in den Bädern enthaltenen Silbers
- die mehrteilige Ausgangslösung mittels NaOH auf etwa pH 13,5 bis 14 eingestellt und das unter Zerlegung des Fe-Komplexes ausfallende Fe(OH)₃ abgetrennt wird,
- die verbleibende erste Zwischenlösung durch Zugabe von Säure und/oder sauren Fixierbädern auf pH 10 eingestellt und das entstehende Ammoniak abgetrennt wird,
- die verbleibende zweite Zwischenlösung mit konzentrierter HCl auf etwa pH 0,5 gebracht wird, wobei die Thiosulfate in Schwefel und schweflige Säure zerfallen und der Schwefel abgetrennt wird,
- die verbleibende dritte Zwischenlösung mit anorganischer Lauge auf etwa pH 1,5 angehoben und die dabei auskristallisierende EDTA abgezogen wird,
- die Restlösung mit Entwicklungsbädern versetzt auf pH 3 angehoben wird und das darin enthaltene Sulfit in SO₂ überführt und dieses abgetrennt wird.

Das in der zweiten Stufe entstehende Ammoniak kann unter Vakuum abgezogen und entweder als reines Ammoniakgas weiterverwendet oder aber durch Einleiten in Wasser in Ammoniumsalze umgewandelt werden. Der in der dritten Stufe anfallende Schwefel kann entweder als elementarer Schwefel weiterverwendet oder als SO₂-Quelle eingesetzt werden.

Die in der vierten Stufe auskristallisierende EDTA kann - gegebenenfalls nach weiterer Reinigung - wiederum zur Herstellung des Komplexbildners verwertet werden.

Das in der letzten Stufe entstehende SO₂ kann wiederum industriellen Zwecken zugeführt, beispielsweise durch Verdichten verflüssigt, durch Einleiten in Wasser in schwefelige Säure oder durch Einleiten in wässerige Hydroxid-Lösungen oder Suspensionen zur Herstellung von Alkalihydrogensulfiten Verwendung finden.

Sofern die in der letzten Stufe entstehende Restlösung noch Reststoffe enthält, die ökologisch problematisch sind, wird die Restlösung mit kleineren Mengen Wasserstoffperoxid, z.B. im Bereich von 10 ml/l, versetzt, so daß die vorhandenen Reststoffe, vornehmlich Restsulfite und organische Verbindungen, oxidiert werden. Sofern notwendig kann die Restlösung nach dem Oxidieren mit Calciumhydroxid auf den vorgeschriebenen pH-Wert für die Abwassereinleitung eingestellt werden. Die organischen Inhaltsstoffe sind soweit aufoxidiert, daß sie biologisch abbaubar sind. Die weiterhin vorhandenen Alkalichloride, die während des Prozesses entstanden sind, sind abwasserrechtlich nicht problematisch.

Der aus der Ausgangslösung ausfallende Fe(OH)₃-Schlamm wird vorzugsweise durch Sedimentation oder Filtration abgetrennt. Die der ersten Zwischenlösung zugegebene Säure kann Salzsäure sein. Stattdessen können aber auch saure Fixierbäder - in der Regel handelt es sich um essigsaure Fixierbäder - zugegeben werden bzw. können diese durch Salzsäure ergänzt werden, um die erste Zwischenlösung auf pH 10 einzustellen. Das nach der Säurezugabe freiwerdende Ammoniak wird vorzugsweise unter Vakuum abgezogen.

Der aus der zweiten Zwischenlösung nach der Zugabe von HCl ausfallende Schwefel wird sedimentiert. Dabei ist es zweckmäßig, die Zwischenlösung einige Stunden stehenzulassen, um eine vollständige Sedimentation des Schwefels zu gewährleisten.

Die der dritten Zwischenlösung zugegebene anorganische Lauge zur Anhebung auf pH 1,5 kann NaOH sein. Stattdessen oder zusätzlich ist es auch möglich, verbrauchte Entwicklerbäder zuzugeben, die in der Regel NaOH enthalten und nach dem Gebrauch eine Restbasizität aufweisen. Das Auskristallisieren der EDTA kann durch langsames Rühren, gegebenenfalls auch durch Impfen mit Keimen unterstützt werden.

Die wiederum mit Entwicklungsbädern auf pH 3 angehobene Restlösung wird vorzugsweise erwärmt, um aus der an SO₂ übersättigten Lösung reines SO₂ auszutreiben, das abgesaugt wird und in der bereits beschriebenen Weise weiter-bzw. wiederverwendet werden kann.

Mit dem erfindungsgemäß vorgeschlagenen Verfahren wird ein Großteil der Wertstoffe, die in farbphotographischen Bädern enthalten sind, zurückgewonnen. Sie können teils in anderen industriellen Prozessen, teils wieder zur Herstellung photographischer Bäder verwendet werden. Die verbleibende Restflüssigkeit kann nach Oxidieren der noch vorhandenen Reststoffe und Einstellen des geforderten pH-Wertes in das Abwasser abgeleitet werden. Ferner ermöglicht die Erfindung die Aufarbeitung der in Color-Prozessen eingesetzten Bäder in einem einzigen mehrstufigen Verfahren. Mit dem erfindungsgemäßen Verfahren ist auch die Aufarbeitung von PDTA-Komplexen (Diamino-Propan-N,N,N',N'-Tetraessigsäure), die sich gelegentlich in Bleichbädern finden, möglich.

## Patentansprüche

1. Verfahren zur Aufarbeitung verbrauchter photographischer Bäder aus Color-Prozessen, nämlich Bleich- oder Bleichfixierbädern mit einem überwiegenden Gehalt an Ammonium-Fe-EDTA (Ethylendiamintetraessigsäure) als Komplexbildner, Fixierbädern mit einem überwiegenden Gehalt an Thiosulfaten, insbesondere Ammonium- und gegebenenfalls Natriumthiosulfat, und Entwicklerbädern mit einem überwiegenden Gehalt an Sulfit, insbesondere Natriumsulfit, dadurch gekennzeichnet, daß nach dem Abscheiden des in den Bädern enthaltenen Silbers
- die mehrteilige Ausgangslösung mittels NaOH auf etwa pH 13,5 bis 14 eingestellt und das unter Zerlegung des Fe-Komplexes ausfallende Fe(OH)₃ abgetrennt wird,
- die verbleibende erste Zwischenlösung durch Zugabe von Säure und/oder sauren Fixierbädern auf pH 10 eingestellt und das entstehende Ammoniak abgetrennt wird,
- die verbleibende zweite Zwischenlösung mit konzentrierter HCl auf etwa pH 0,5 gebracht wird, wobei die Thiosulfate in elementaren Schwefel und schweflige Säure zerlegt werden, und der Schwefel abgetrennt wird,
- die verbleibende dritte, schwefligsaure Zwischenlösung mit anorganischer Lauge auf etwa pH 1,5 angehoben und die dabei auskristallisierende EDTA abgezogen wird,
- die Restlösung mit Entwicklungsbädern versetzt auf pH 3 angehoben wird und das darin enthaltene Sulfit in SO₂ überführt und dieses abgetrennt wird.

2. Verfahren nach Anspruch 1, dadurch gekennzeichnet, daß die Restlösung zur Oxidation der vorhandenen Reststoffe mit H₂O₂ versetzt wird.

3. Verfahren nach Anspruch 2, dadurch gekennzeichnet, daß die Restlösung nach dem Oxidieren der Reststoffe mit Ca(OH)₂ auf den für die Abwassereinleitung vorgeschriebenen pH-Wert eingestellt wird.

4. Verfahren nach Anspruch 1, dadurch gekennzeichnet, daß der aus der Ausgangslösung ausfallende Fe(OH)₃ Schlamm durch Sedimentation oder Filtration abgetrennt wird.

5. Verfahren nach Anspruch 1 oder 4, dadurch gekennzeichnet, daß das nach der Säurezugabe freiwerdende Ammoniak unter Vakuum abgezogen wird.

6. Verfahren nach Anspruch 1, dadurch gekennzeichnet, daß der aus der zweiten Zwischenlösung nach der Zugabe von HCl ausfallende Schwefel sedimentiert und abgetrennt wird.

7. Verfahren nach Anspruch 1, dadurch gekennzeichnet, daß der dritten Zwischenlösung als anorganische Lauge basische Entwicklungsbäder und/oder NaOH zugegeben werden.

8. Verfahren nach Anspruch 1 oder 7, dadurch gekennzeichnet, daß die dritte Zwischenlösung zur Unterstützung der Kristallbildung langsam gerührt und/ oder mit Keimen geimpft wird.

9. Verfahren nach Anspruch 1, dadurch gekennzeichnet, daß die Restlösung mit den zugegebenen Entwicklerbädern erwärmt und das entstehende SO₂ abgesaugt wird.

## Claims

1. Process for working up spent photographic baths from colour processes, namely bleach or bleach fixing baths with a preponderant content of ammonium-Fe-EDTA (ethylene diamine tetraacetic acid) as sequestrants, fixing baths with a preponderant content of thiosulphates, particularly ammonium thiosulphate and optionally sodium thiosulphate and developing baths with a preponderant content of sulphite, particularly sodium sulphite, characterized in that following the separation of the silver contained in the bath
- the multipart starting solution is set to a pH between 13.5 and 14 by means of NaOH and the Fe(OH)₃ precipitate accompanied by the decomposition of the Fe-complex is separated,
- the remaining, first intermediate solution is set to a pH of 10 by the addition of acid and/or acid fixing baths and the ammonia obtained is separated,
- the remaining, second intermediate solution is brought to a pH of approximately 0.5 with concentrated HCl, the thiosulphates being decomposed into elementary sulphur and sulphurous acid and the sulphur is separated,
- the remaining, third, sulphurous intermediate solution is raised to a pH of approximately 1.5 with inorganic lye and the recrystallized EDTA is drawn off,
- the residual solution is mixed with developing baths and raised to a pH of 3 and the sulphite contained therein is converted into SO₂ and the latter is separated.

2. Process according to claim 1, characterized in that the residual solution is mixed with H₂O₂ for oxidizing the residual substances present.

3. Process according to claim 2, characterized in that after the oxidation of the residual substances, the residual solution is adjusted with Ca(OH)₂ to the pH-value prescribed for introduction into the sewage system.

4. Process according to claim 1, characterized in that the Fe(OH)₃ slurry precipitated from the starting solution is separated by sedimentation or filtration.

5. Process according to claim 1 or 4, characterized in that the ammonia liberated after acid addition is drawn off in vacuo.

6. Process according to claim 1, characterized in that the sulphur precipitated from the second intermediate solution following HCl addition is sedimented and separated.

7. Process according to claim 1, characterized in that basic developing baths and/or NaOH are added to the third intermediate solution as inorganic lye.

8. Process according to claim 1 or 7, characterized in that for assisting crystallization the third intermediate solution is slowly stirred and/or seeded with nuclei.

9. Process according to claim 1, characterized in that the residual solution with the added developing bath is heated and the resulting So₂ is sucked off.

## Revendications

1. Procédé de retraitement de bains photographiques émanant de procédés de développement en couleur, en particulier de bains de blanchiment ou de bains de blanchiment et de fixation présentant une teneur prépondérante en ammonium-Fe-EDTA (acide éthylènediaminetétraacétique) servant d'agent complexant, de bains de fixation présentant une teneur prépondérante en thiosulfates, en particulier en thiosulfate d'ammonium et le cas échéant en thiosulfate de sodium, et de bains de développement présentant une teneur prépondérante en sulfite, notamment du sulfite de sodium, caractérisé en ce qu'après séparation de l'argent contenu dans les bains,
. on ajuste le pH de la solution initiale à composants multiples à l'aide de NaOH à environ pH 13,5 à 14 et on sépare le Fe(OH)₃ résultant de la décomposition du complexe Fe,
. on ajuste le pH de la première solution intermédiaire restante à pH 10 en y ajoutant un acide et/ou des bains de fixation acides et on sépare l'ammoniaque en résultant,
. on abaisse le pH de la deuxième solution intermédiaire à environ pH 0,5 par HCl concentré, les thiosulfates étant décomposés en soufre élémentaire et en acide sulfureux, et on sépare le soufre,
. on augmente le pH de la troisième solution intermédiaire sulfureuse restante à environ pH 1,5 par un bain alcalin anorganique et on extrait l'EDTA se cristallisant au cours du procédé,
. on augmente le pH de la solution restante en la mélangeant à des bains de développement, on transforme le sulfite qu'elle contient en SO₂ et on sépare celui-ci.

2. Procédé selon la revendication 1, caractérisé en ce que la solution restante est mélangée à H₂O₂ pour réaliser l'oxydation des résidus existants.

3. Procédé selon la revendication 2, caractérisé en ce qu'après oxydation des résidus avec Ca(OH)₂, le pH de la solution restante est ajusté au pH réglementaire pour l'évacuation des eaux usées.

4. Procédé selon la revendication 1, caractérisé en ce que le dépôt de Fe(OH)₃ résultant de la décantation de la solution initiale est séparé par sédimentation ou filtration.

5. Procédé selon la revendication 1 ou 4, caractérisé en ce que l'ammoniaque libéré après addition d'acide est extrait sous vide.

6. Procédé selon la revendication 1, caractérisé en ce que le soufre résultant de la décantation de la deuxième solution intermédiaire après ajout d'HCl est sédimenté et séparé.

7. Procédé selon la revendication 1, caractérisé en ce que l'on ajoute à la troisième solution intermédiaire des bains de développement basiques et/ou du NaOH en tant que bain anorganique.

8. Procédé selon la revendication 1 ou 7, caractérisé en ce que l'on remue lentement et/ou on vaccine avec des germes la troisième solution intermédiaire pour favoriser la cristallisation.

9. Procédé selon la revendication 1, caractérisé en ce que l'on réchauffe la solution restante avec les bains de développement ajoutés et on enlève par succion le SO₂ en résultant.
